# NEW EUROPEAN PATENT SPECIFICATION

(11) **EP 0 880 903 B2**
(45) Date of publication and mention of the opposition decision: **31.08.2005**
(45) Mention of the grant of the patent: 02.01.2003
(21) Application number: 97830249.5
(22) Date of filing: 28.05.1997
(51) Int. Cl.: A23L 3/3418, A23B 7/148, B01D 53/047

(54) **Method for treating the atmosphere contained in enclosed spaces**
Verfahren zur Behandlung der in einem Innenraum eingeschossenen Atmosphäre
Procédé pour le traitement de l'atmosphère confinée à l'interieur d'une enceinte

(43) Date of publication of application: 02.12.1998
(73) Proprietor: ISOLCELL ITALIA S.P.A., I-39055 Laives (BZ) (IT)
(72) Inventor: Pruneri, Dario, 39100 Bolzano (IT); Villa, Ivano, 39100 Bolzano (IT)
(74) Representative: Forattini, Amelia

(56) References cited:
- EP-A- 0 040 935
- EP-A- 0 467 668
- EP-A- 0 565 827
- EP-A- 0 749 692
- EP-B- 0 565 827
- EP-B- 0 769 918
- DE-A- 2 922 145
- DE-A- 3 203 701
- FR-A- 1 397 270
- McGraw Hill Encyclopedia of Science and Technology (1960), vol.3 p.349. vol.5 p. 179
- Letter of Storex B.V.

## Description

The present invention relates to a method for treating the atmosphere contained in enclosed spaces.

Machines are known which are used to reduce the amount of oxygen and carbon dioxide contained in enclosed spaces such as cells for preserving foods. These conventional machines are essentially constituted by two types of systems. A first type of system introduces nitrogen, diluting the amounts of O₂ by using both industrial gases (nitrogen in cylinders or liquid nitrogen) and nitrogen combustion generators or molecular separation membrane generators, or molecular sieves such as PSA or VSA.

A second system absorbs the carbon dioxide in a closed circuit using chemical substances or activated carbons which can be regenerated with atmospheric air, or by introducing nitrogen as in the first system.

All conventional systems therefore flush the cells, typically using nitrogen.

DE-A-2922145 discloses an apparatus, for treating the atmosphere contained in an enclosed space, having a high pressure pump drawing air from the outside and modifying such air before introducing it into the enclosed space.

EP-A-0467668 discloses a system for controlling the atmosphere of a container, for use in storage and transportation of perishable goods, wherein an adsorber is used for adsorbing oxygen and carbon dioxide from the container EP 0 769 918 B1 describes a method of creating a controlled atmosphere in a container by means of a nitrogen production process and a CO₂ removal process including an adsorption and a regeneration step.

The aim of the present invention is to provide an improve method for reducing the oxygen and carbon dioxide content in a cell.

Another object of the invention is to provide a method for reducing the oxygen and carbon dioxide content in an enclosure, using less energy.

Another object is to provide a method which can also absorb CO₂.

This aim, these objects, and others which will become apparent hereinafter are achieved by a method as claimed in the appended claims.
Figured 1 is a schematic view of an apparatus for carrying out a method according to the invention.
Figure 2 is a schematic lateral and sectional elevation view of a reservoir of an apparatus for carrying out a method according to the invention.
Figure 3 is a construction diagram of an apparatus for carrying out a method according to the invention.

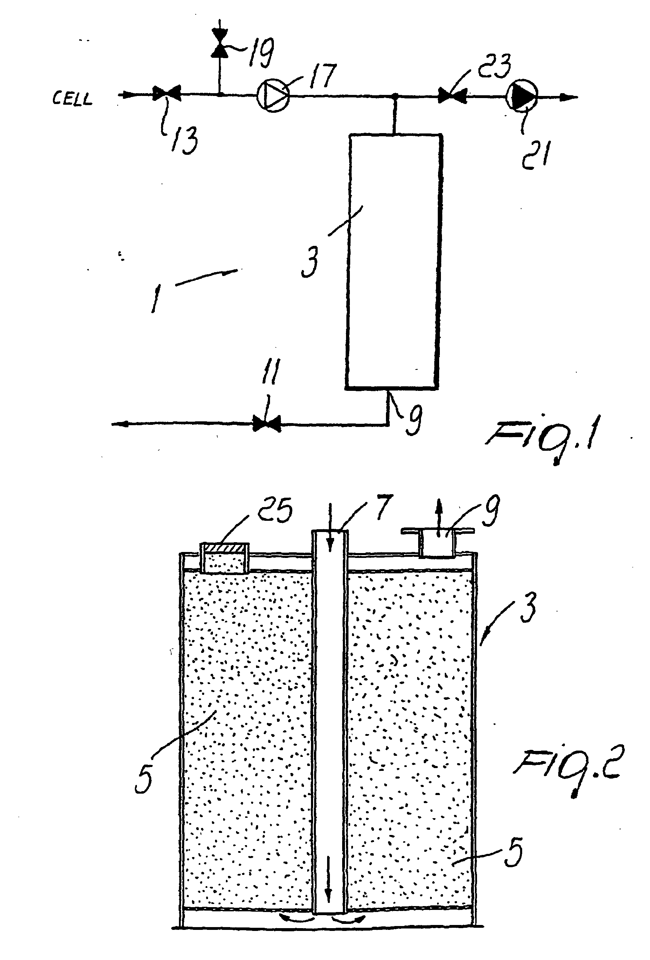

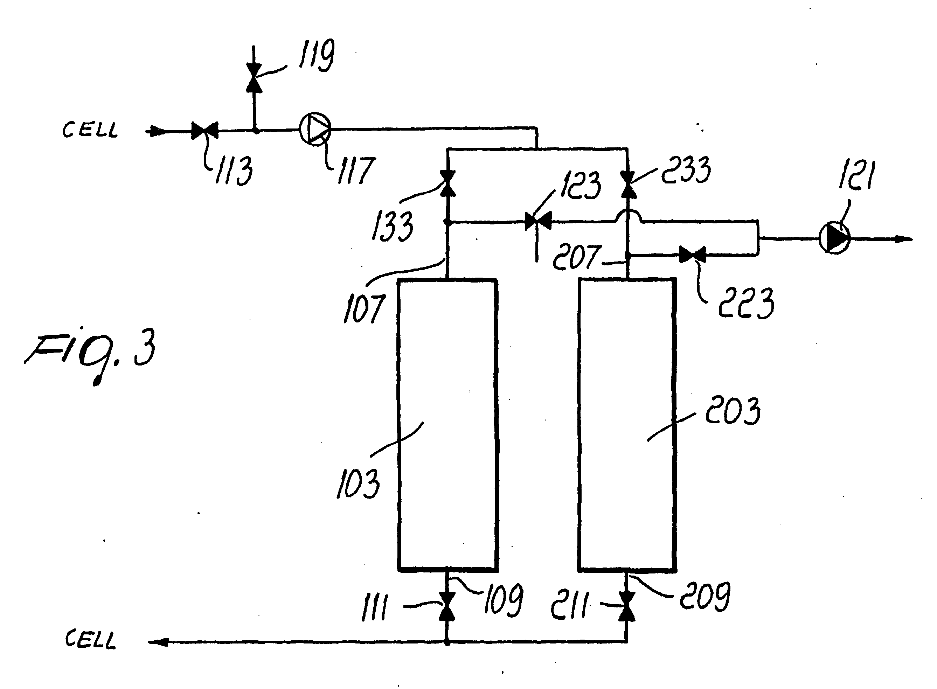

With reference to the above figures, the apparatus for carrying out the method of the invention generally designated by the reference numeral 1, includes a reservoir 3 which contains molecular sieves 5 and includes an inlet 7 and an outlet 9.

Outlet 9 is connected to an enclosed space from which oxygen or carbon dioxide must be removed or substantially reduced, for example a cell (not shown), by means of an outlet valve 11. Inlet 7 is connected to the cell by means of an inlet valve 13. A ventilation device, constituted by a fan 17, is arranged between inlet valve 13 and inlet 7. A second external connection valve 19 is arranged between fan 17 and inlet valve 13. Inlet 7 is also connected to a vacuum pump 21 through a vacuum valve 23.

Figure 2 shows the reservoir 3 containing the molecular sieves, which can be loaded into the reservoir through a loading port 25.

The molecular sieves used can be for example CMS-F carbons, marketed by isolcell Italia SpA and commonly used for PSA nitrogen-generating systems.

The operation of the apparatus according to the invention is as follows.

During a first regeneration step, vacuum pump 21 is actuated and, by opening vacuum valve 23, produces a vacuum in reservoir 3. The higher the vacuum, the higher the efficiency of the subsequent absorption step.

After a preset time has elapsed, a second absorption step begins, during which outlet valve 11 and inlet valve 13 are opened and vacuum pump 21 is switched off by closing vacuum valve 23. At this point, fan 17 is activated, drawing air from the cell and sending it to reservoir 3. The air that exits from the outlet 11 retums to the cell with a reduced content of oxygen and carbon dioxide by virtue of the action of molecular sieves 5 inside reservoir 3.

After a certain time has elapsed, a third compensation step begins, during which external connection valve 19 is opened and, by closing inlet valve 13, fan 17 draws air from the outside and sends it first into reservoir 3 and then into the cell, with part of the oxygen removed. This compensation step is necessary to restore the air removed from the system during the previous step.

After this series of steps has been performed, external connection valve 19 and outlet valve 9 are closed and vacuum pump 21 is restarted to regenerate the molecular sieves.

In practice it has been observedthatthe invention achieves the intended aim and objects.

Figure 3 in fact illustrates a second embodiment which includes two reservoirs for a continuous operation of the apparatus. The apparatus, generally designated by the reference numeral 100, includes a first reservoir 103 and a second reservoir 203 which are substantially identical to reservoir 3 of apparatus 1 and contain the molecular sieves.

Each reservoir 103 and 203 includes an outlet, respectively 109 and 209, and an inlet, respectively 107 and 207.

Outlets 109,209 are connected to an enclosed space from which oxygen or carbon dioxide must be removed or substantially reduced, for example a cell (not shown), by means of a respective outlet valve 111, 211. Inlets 107, 207 are connected to the cell by means of an inlet valve 113. A ventilation device, constituted by a fan 117, is arranged between- inlet valve 113 and inlets 107, 207. A second external connection valve 119 is arranged between fan 117 and inlet valve 113. Respective selection valves 133 and 233 are arranged between the fan 117 and inlets 107, 207. Inlet 107 is also connected to a vacuum pump 121 through a vacuum valve 123. Inlet 207 is likewise connected to vacuum pump 121 by means of a vacuum valve 223.

The operation of apparatus 100, with two reservoirs, is conceptually identical to the operation of apparatus 1 with one reservoir, but it allows a continuous operation: while the regeneration cycle is performed in one reservoir, it is possible to perform the absorption step and the compensation step with the other reservoir.

During the regeneration step of first reservoir 103 and the simultaneous absorption step in second reservoir 203, vacuum pump 121 is actuated and valve 123 is opened, producing a vacuum in first reservoir 103, for example to approximately 40 mbar of absolute pressure.

Simultaneously, valves 211, 113 and 233 are opened and fan 117 is activated, drawing the air that is present in the cell and sending it to second reservoir 203, for example with a pressure of approximately 50 mbar. The air that leaves second reservoir 203 is sent to the cell across valve 211 with a reduced content of oxygen and carbon dioxide.

During the regeneration step of first reservoir 103 and the simultaneous compensation step of second reservoir 203, first reservoir 103 remains in the previous condition, while valve 113 is closed and valve 119 is opened.

During the subsequent regeneration step of second reservoir203 and the absorption step offirst reservoir 103, valves 123, 233, 211 and 119 are closed and valves 113, 133, 223 and 111 are opened; accordingly, vacuum is produced in second reservoir 203 and absorption is performed in first reservoir 103.

Finally, during the regeneration step of second reservoir 203 and during the compensation step of first reservoir 103, the second reservoir remains in the conditions of the previous step, while valve 113 closes and valve 119 opens, feeding external air into first reservoir 103 and then into the cell, after it has been partially purified.

The materials employed, as well as the dimensions, may of course be any according to the requirements and the state of the art.

## Claims

1. Method for absorbing oxygen and carbon dioxide from a cell, comprising:
a regeneration step, in which vacuum is produced in a reservoir (3) which contains molecular sieves (5);
an absorption step, during which air is drawn from the cell and sent to the reservoir and during which the air that leaves the reservoir returns to the cell with a reduced content of oxygen and carbon dioxide owing to the action of the molecular sieves inside the reservoir;
a compensation step, during which air is drawn from outside and sentfirst into the reservoir and then into the cell, after being at least partially deprived of its oxygen content;
**characterized in that** in said compensation steps the amount of air drawn from the outside is sufficient to restore the air removed from the system during the previous step.

2. Method for absorbing oxygen and carbon dioxide from a cell, comprising:
- a first step, comprising a regeneration step of a first reservoir (103), wherein a vacuum is produced In the first reservoir which contains molecular sieves; a simultaneous absorption step in a second reservoir (203), wherein air is drawn from the cell and sent to the second reservoir and wherein the air that leaves the second reservoir returns to the cell with a reduced oxygen and carbon dioxide content owing to the action of the molecular sieves inside the second reservoir;
- a second step which comprises said regeneration step of the first reservoir simultaneously with a compensation step of the second reservoir, during which air is drawn from outside and sent first into the second reservoir and then into the cell, after being at least partially deprived of its oxygen content, in order to restore the air removed from the system of the second reservoir during the absorption step of the second reservoir;
**characterized in that** it comprises:
- a third step which comprises a regeneration step of a second reservoir, during which vacuum is produced in the second reservoir which contains molecular sieves; a simultaneous absorption step in a first reservoir, during which air is drawn from the cell and sent into the first reservoir and during which the air that leaves the first reservoir returns to the cell with a reduced content of oxygen and carbon dioxide, owing to the action of the molecular sieves inside the first reservoir;
- a fourth step comprising said regeneration step of the second reservoir, which is simultaneous with a compensation step of the first reservoir, during which air is drawn from outside and sent first into the first reservoir and then into the cell, after being at least partially deprived of its oxygen content, in order to restore the air removed from the system of the first reservoir during the absorption step of the first reservoir.

## Patentansprüche

1. Verfahren zum Absorbieren von Sauerstoff und Kohlendioxid aus einer Kammer, umfassend:
- einen Regenerationsschritt, in welchem in einem Reservoir (3), welches Molekularsiebe (5) enthält, ein Vakuum erzeugt wird,
- einen Absorptionsschritt, während dem Luft aus der Kammer gezogen und an das Reservoir geleitet wird und während dem die das Reservoir verlassende Luft infolge der Wirkung der Molekularsiebe innerhalb des Reservoirs mit einem reduzierten Gehalt an Sauerstoff und Kohlendioxid in die Kammer zurückgeleitet wird,
- einen Kompensationsschritt, während dem Luft von Außen eingesogen wird und zunächst in das Reservoir und nachfolgend in die Kammer geleitet wird, nachdem ihr Sauerstoffgehalt wenigstens teilweise entzogen wurde,
**dadurch gekennzeichnet,daß**
die während der Kompensationsschritte von außen eingesogene Luft ausreicht, um die während der vorhergehenden Schritte aus dem System abgeführte Luft zu ersetzen.

2. Verfahren zum Absorbieren von Sauerstoff und Kohlendioxid aus einer Kammer, umfassend:
- einen ersten Schritt, der einen Regenerationsschritt eines ersten Reservoirs (103) aufweist, wobei in dem ersten Reservoir, welches Molekularsiebe enthält, ein Vakuum erzeugt wird, einen gleichzeitigen Absorptionsschritt in einem zweiten Reservoir (203), wobei Luft aus der Kammer gezogen und in das zweite Reservoir geleitet wird und wobei die Luft, welche das zweite Reservoir verläßt, mit einem verminderten Sauerstoff- und Kohlendioxidgehalt infolge der Wirkung der Molekularsiebe innerhalb des zweiten Reservoirs zurückgeleitet wird,
- einen zweiten Schritt, welcher den Regenerationsschritt des ersten Reservoirs gleichzeitig einem Kompensationsschritt des zweiten Reservoirs aufweist, während dem Luft von Außen eingesogen und zunächst in das zweite Reservoir und nachfolgend in die Kammer geleitet wird, nachdem zumindest ein Teil des Sauerstoffgehaltes der Luft entzogen wurde, um die während des Absorptionsschrittes im zweiten Reservoir aus dem System des zweiten Reservoirs abgeführte Luft zu ersetzen,
**dadurch gekennzeichnet, daß** das Verfahren aufweist:
- einen dritten Schritt, der einen Regenerationsschritt eines zweiten Reservoirs beinhaltet, während dem ein Vakuum in dem Molekularsiebe enthaltenden zweiten Reservoir erzeugt wird, einen gleichzeitigen Absorptionsschritt in einem ersten Reservoir, während dem Luft aus der Kammer gezogen und in das erste Reservoir geleitet wird, wobei die Luft, die das erste Reservoir verläßt, infolge der Wirkung der Molekularsiebe innerhalb des ersten Reservoirs mit einem reduzierten Gehalt an Sauerstoff und Kohlendioxid in die Kammer zurückgeleitet wird,
- einen vierten Schritt, der den Regenerationsschritt des zweiten Reservoirs gleichzeitig mit einem Kompensationsschritt des ersten Reservoirs aufweist, während dem Luft von Außen eingebracht und zuerst in das erste Reservoir und nachfolgend in die Kammer weitergeleitet wird, nachdem zumindest ein Teil des Sauerstoffgehaltes der Luft entzogen wurde, um die während des Absorptionsschrittes im ersten Reservoir aus dem System des ersten Reservoirs abgeführte Luft zu ersetzen.

## Revendications

1. Procédé d'absorption de l'oxygène et du dioxyde de carbone d'une cellule, comprenant :
une étape de régénération, dans laquelle un vide est produit dans un réservoir (3) qui contient des tamis moléculaires (5) ;
une étape d'absorption, pendant laquelle de l'air est soutiré de la cellule et envoyé vers le réservoir et pendant laquelle l'air qui quitte le réservoir retourne dans la cellule avec une teneur réduite en oxygène et en dioxyde de carbone en raison de l'action des tamis moléculaires à l'intérieur du réservoir ;
une étape de compensation, pendant laquelle de l'air est soutiré de l'extérieur et envoyé d'abord dans le réservoir puis dans la cellule, après avoir été au moins partiellement privé de sa teneur en oxygène ;
**caractérisée en ce que** pendant ladite étape de compensation, la quantité d'air soutiré de l'extérieur est suffisante pour restaurer l'air éliminé du système pendant l'étape précédente.

2. Procédé d'absorption de l'oxygène et du dioxyde de carbone d'une cellule, comprenant :
- une première étape, comprenant une étape de régénération d'un premier réservoir (103), pendant laquelle un vide est produit dans le premier réservoir qui contient des tamis moléculaires ; une étape simultanée d'absorption dans un second réservoir (203), pendant laquelle de l'air est soutiré de la cellule et envoyé vers le second réservoir et pendant laquelle l'air qui quitte le second réservoir retourne dans la cellule avec une teneur réduite en oxygène et en dioxyde de carbone en raison de l'action des tamis moléculaires à l'intérieur du second réservoir ;
- une seconde étape, qui comprend ladite étape de régénération du premier réservoir simultanément à une étape de compensation du second réservoir, au cours de laquelle de l'air est soutiré de l'extérieur et envoyé dans le second réservoir puis dans la cellule, après avoir été au moins partiellement privé de sa teneur en oxygène, afin de restaurer l'air éliminé du système du second réservoir pendant l'étape d'absorption du second réservoir ;
**caractérisé en ce qu'**il comprend :
- une troisième étape qui comprend une étape de régénération d'un second réservoir, pendant laquelle un vide est produit dans le second réservoir qui contient des tamis moléculaires ; une étape simultanée d'absorption dans un premier réservoir, pendant laquelle de l'air est soutiré de la cellule et envoyé vers le premier réservoir et pendant laquelle l'air qui quitte le premier réservoir retourne vers la cellule avec une teneur réduite en oxygène et en dioxyde de carbone en raison de l'action des tamis moléculaires à l'intérieur du premier réservoir ;
- une quatrième étape, qui comprend ladite étape de régénération du second réservoir simultanément à une étape de compensation du premier réservoir, au cours de laquelle de l'air est soutiré de l'extérieur et envoyé dans le premier réservoir puis dans la cellule, après avoir été au moins partiellement privé de sa teneur en oxygène, afin de restaurer l'air éliminé du système du premier réservoir pendant l'étape d'absorption du premier réservoir.
